# EUROPEAN PATENT APPLICATION

(11) **EP 2 866 401 A1**
(43) Date of publication of application: **29.04.2015**
(21) Application number: 13190164.7
(22) Date of filing: 24.10.2013
(51) Int. Cl.: H04L 27/26

(54) **Method for transmitting data by means of a wireless channel, first transmitter device, second transmitter device and communication system**

(71) Applicant: Airbus Defence and Space GmbH, 85521 Ottobrunn (DE); Airbus SAS, 31700 Blagnac (FR)
(72) Inventor: Blümm, Christian, 81539 München (DE); Heller, Christoph, 82024 Taufkirchen (DE)
(74) Representative: Flügel Preissner Kastel Schober

(57) **Abstract**

The present invention relates to a method for improving data transmission in a time-variant environment. A first transmitter device (10) transmits a channel sounding signal to a second transmitter device (20) over a wireless channel. The second transmitter device estimates channel characteristics like Doppler shift and propagation delay of the wireless channel from the sounding signal and estimates therefrom a Cyclic Prefix length and FFT size for the first transmitter device. The estimated CP length and FFT size are signaled to the first transmitter device to be used on the next transmission from the first transmitter device.

## Description

The present invention relates to a method for transmitting data between a first transmitter device and a second transmitter device by means of a wireless channel. The wireless channel has a channel environment and comprises at least one multi-path-component. The invention also relates to a first transmitter device for communicating with a second transmitter device by means of a wireless channel and a second transmitter device for communicating with the first transmitter device by means of the wireless channel. Additionally, the present invention relates to a communication system comprising a first transmitter device and a second transmitter device.

In wireless data communication systems, in particular digitally modulated wireless data transmission systems, in particular systems that use e. g. phase shift keying (PSK), amplitude modulation (AM), frequency shift keying (FSK), frequency division multiplexing (FDM), orthogonal frequency division multiplexing (OFDM) or any combination thereof, certain characterizing parameters of a wireless channel are of interest for improving data transmission parameters, e. g. error rates. In certain situations, data transmission is impossible if the wireless data transmission system is not matched according to the characteristics of the wireless channel.

To acquire knowledge about the characterizing parameters, methods for directly or indirectly measuring in the parameters are known. Generally, a method comprising the steps of sending a test signal through a wireless channel by a first media access device, thus exciting the wireless channel, receiving the signal via a second media access device, comparing the received signal to a known test signal and deriving the characterizing parameters of the scattering function from the results has been widely adopted for this purpose. This kind of characterizing method is called a channel sounding. Often, the test signal can comprise a pulse type signal for performing a pulse compression channel sounding, a UWB type signal for performing UWB channel sounding and/or a chirp type signal. The test signal or chirp signal allows for measurement of channel delay and Doppler shift for both a line of sight channel as well as for multi-path-component created by reflections. The channel delays and Doppler shifts measured are determined by the scattering function of the wireless channel and can be used to create a model or approximation of the scattering function.

The present invention aims to improve the methods for transmitting data known from the prior art. A further object of the present invention is to improve the known methods for data communication in a time-variant environment.

According to the invention, the method for transmitting data between a first transmitter device and a second transmitter device by means of a wireless channel is proposed, the wireless channel comprising a channel environment and at least one multi-path-component. The wireless channel is configured to convey a signal from the first transmitter device to the second transmitter device and/or from the second transmitter device to the first transmitter device. The signal is produced by using orthogonal frequency-division multiplexing (OFDM). The signal comprises at least one sub-carrier configured to transmit at least one symbol comprising a Cyclic Prefix

The first transmitter device comprises a first channel sounder module, a first waveform module and a first media access device. The second transmitter device comprises a second channel sounder module, a second waveform module and a second media access device. The method comprising the following steps:
a. producing a test signal at the first transmitter device;
b. communicating the test signal to the first media access device;
c. transmitting the test signal from the first media access device to the second media access device;
d. receiving the test signal at the second media access device;
e. determining at the second transmitter device an Adapted-Cyclic Prefix based on the received test signal;
f. producing a first signal carrying the information about the Adapted-Cyclic Prefix at the second transmitter device;
g. transmitting the first signal from the second media access device to the first media access device;
h. decoding the first signal at the first transmitter device to obtain the Adapted-Cyclic Prefix
i. transmitting a second signal being produced by using orthogonal frequency division multiplexing (OFDM) conveying at least one symbol using the Adapted-Cyclic Prefix as the Cyclic Prefix for the symbol the second signal being produced in the first transmitter device and being transmitted to the second transmitter device via the first media access device and the second media access device and/or produced in the second transmitter device and being transmitted to the first transmitter device via the second media access device and the first media access device;
j. repeating steps a. to i. at least once.

The method according to the present invention allows for an efficient data transmission between a first transmitter device and a second transmitter device.

When OFDM-based wireless communication is used, an increase in the Cyclic-Prefix improves the robustness of the communication against delay spread which results from multipath propagation. The longer the Cyclic Prefix, the more robust becomes the OFDM transmission but the lower becomes the transmission rate. The Fast-Fourier-Transform-Size is indirectly proportional to the spectral sub-carrier distance under a given sampling frequency. The smaller the Fast-Fourier-Transform-Size, the more robust becomes the OFDM transmission against Doppler spread, but the less sub-carriers are available for a given spectral bandwidth, which reduces the data-rate.

Preferably, the symbol comprises at least two sub-carriers and a Fast-Fourier-Transform Size, wherein preferably an Adapted-Fast-Fourier-Transform size is determined at the second transmitter device based on the received test signal within step e. Preferably, the first signal carries the information about the Adapted-Fast-Fourier-Transform size within step f. Preferably, the first signal is decoded at the first transmitter device to further obtain the adapted fast Fourier transform size within step h. Preferably, conveying the at least one symbol is achieved using the Adapted-Fast-Fourier-Transform size as the Fast-Fourier-Transform size of the symbol within step i.

Preferably, the communication between the first transmitter device and the second transmitter device occuring in step i can be characterised as the pay load communication.

Preferably, determining the Adapted-Cyclic Prefix and the Adapted-Fast-Fourier-Transform-Size is achieved by determining a scattering function for the specific carrier frequency which equals the carrier frequency used for communication.

According to a preferred aspect of the present invention, a delay and a Doppler shift for each multi-path-component based on the scattering function are determined preferably at the second channel sounder module.

According to another aspect of the present invention, the Adapted-Cyclic Prefix and the Adapted-Fast-Fourier-Transform-Size is determined based on the delay spread and the Doppler spread preferably at the second channel sounder module.

Preferably, steps a. and/or h. are executed at the first channel sounder module.

Preferably, steps e. and/or f. are executed at the second channel sounder module.

According to a preferred aspect of the present invention, the Adapted-Cyclic Prefix and the Adapted-Fast-Fourier-Transform-Size is communicated to the second waveform module after step e. and before step i..

According to another aspect of the present invention, the Adapted-Cyclic Prefix and the Adapted-Fast-Fourier-Transform-Size is communicated to the first waveform module between steps h. and i.

Preferably, in step j., steps a. to i. are repeated after the lapse of a predetermined amount of time. This allows for a better communication between the first transmitter device and the second transmitter device in an environment whose characteristics vary over time.

Preferably, the predetermined amount of time is matched to a variation speed of the channel environment and/or is predetermined when the variation speed is estimated from the given communication.

The variation speed of the channel environment is preferably evaluated by determining a variation rate of the scattering function over time. Preferably, the variation rate is compared to a variation threshold. Preferably, the prederminded amount of time is changed when the variation rate exels the varation threshold.

According to a preferred aspect of the present invention, orthogonal frequency-division multiplexing is used to produce the second signal during step i.

According to another aspect of the invention, steps a. to n. are repeated after a change of the channel environment has been detected. This allows for an optimum communication between the first transmitter device and the second transmitter device in a variable environment, wherein the characteristics of the wireless channel change accordingly.

Preferably, the first transmitter device comprises a first channel sounder module and a first waveform module, the first channel sounder module being configured to communicate the information about the Cyclic Prefix and the Fast-Fourier-Transform-Size to the first waveform module.

Preferably, the first waveform module is configured to receive the information about the Cyclic Prefix and the Fast-Fourier-Transform-Size from the first channel sounder module.

Preferably, the second channel sounder module is configured to communicate the information about the Adapted-Cyclic Prefix and the Adapted-Fast-Fourier-Transform-Size to the second waveform module.

Preferably, the second transmitter device comprises a second channel sounder module and a second waveform module, the second channel sounder module being configured to communicate the information about the Cyclic Prefix and the Fast-Fourier-Transform-Size to the second waveform module.

According to a preferred aspect of the present invention, the second waveform module is configured to produce a second signal to be communicated to the second media access device.

The second channel sounder module is configured to communicate the information about the Cyclic Prefix and the Fast-Fourier-Transform-Size to the second waveform module.

Preferably, the second waveform module is configured to receive the information about the Adapted-Cyclic Prefix and the Adapted-Fast-Fourier-Transform-Size from the second channel sounder module.

Preferably, the test signal is produced in the first channel sounder module. In a preferred embodiment, the first signal is produced in the second channel sounder module. Preferably, the second signal is produced in the first waveform module and/or the second waveform module.

The invention also relates to a first transmitter device. The first transmitter device comprises a first media access device configured to communicate bidirectionally over the wireless channel with a second media access device corresponding to a second transmitter device.

The transmitter device is configured to produce a test signal and configured to decode a first signal carrying the information about a Cyclic Prefix and a Fast-Fourier-Transform-Size. The first transmitter device is further configured to produce and/or receive a second signal to be communicated to the first media access device.

The first media access device is configured to transmit the test signal and the second signal to the second media access device and configured to receive the first signal. The first transmitter device is being configured to be usable to implement the method according to claims 1 to 11.

According to another aspect of the present invention, the first transmitter device is a telephone transmitter device, a long term evolution (LTE) telephone device, a world wide interoperability for microwave acess (WiMAX) device and/or a WLAN IEEE 802.11 a/g device.

According to another aspect of the invention, the first waveform module is an orthogonal frequency division multiplexing waveform module configured to produce and/or decode the second signal using orthogonal frequency division multiplex.

The invention additionally relates to a second transmitter device. The second transmitter device comprises a second media access device configured to communicate bidirectionally over the wireless channel with a first media access device corresponding to a first transmitter device.

The second transmitter device is configured to receive a test signal and configured to produce a first signal carrying the information about a Cyclic Prefix and a Fast-Fourier-Transform-Size. The second transmitter device is further configured to produce and/or receive a second signal to be communicated to the first media access device. The first transmitter device is being configured to be usable to implement the method according to claims 1 to 11.

Preferably, the second media access device is configured to receive the test signal, configured to transmit the second signal to the first media access device and configured to receive the second signal from the first media access device.

According to another aspect of the present invention, the second transmitter device can be characterized as a mobile communication device.

Preferably, the mobile communication device can be a handheld computer, a tablet computer, a mobile phone or a smart phone, for instance.

The invention also relates to a communication system comprising a first transmitter device according to the invention and a second transmitter device according to the invention. The communication system is being configured to be usable to implement the method according to the present invention.

The advantage of the present invention is to allow for an adaptive reconfiguration of the modulation parameters Cyclic Prefix and a Fast-Fourier-Transform-Size, each time when channel sounding is applied. This is especially beneficial for channel characteristics which vary fundamentally overtime.

An example for such an environment can be the mobile communication out of a train, which, in the beginning halts in a train station. In the environment of a train station, the method for transmitting data between a first transmitter device and a second transmitter device has to cope with a dense multi-path-environment, this environment requiring a large Cyclic-Prefix, but allowing for a large Fast-Fourier-Transform. Later, when the train leaves the station and travels at a certain speed, the communication becomes more difficult due to the Doppler spread which results from the train motion, while requiring a small Cyclic-Prefix, but allowing for small Fast-Fourier-Transform.

Designing the link with a constant parameter set with a high safety margin (large Cyclic-Prefix, small Fast-Fourier-Transform) would unduly decimate throughput.

A different constant parameter set with a small safety margin (small Cyclic-Prefix, large Fast-Fourier-Transform) would unduly reduce channel robustness.

The invention will further be explained with the aid of an embodiment as outlined in schematic drawings which show:
- Fig. 1: a schematic representation of the first transmitter device according to an embodiment of the invention;
- Fig. 2: a schematic representation of the second transmitter device;
- Fig. 3: a schematic representation of the first transmitter device;
- Fig. 4: a schematic representation of the second transmitter device;
- Fig. 5: a schematic representation of the first transmitter device;
- Fig. 6: a schematic representation of the second transmitter device;
- Fig. 7: a representation of the channel scattering function;
- Fig. 8: a representation of a power delay profile;
- Fig. 9: a representation of a Doppler spectrum.

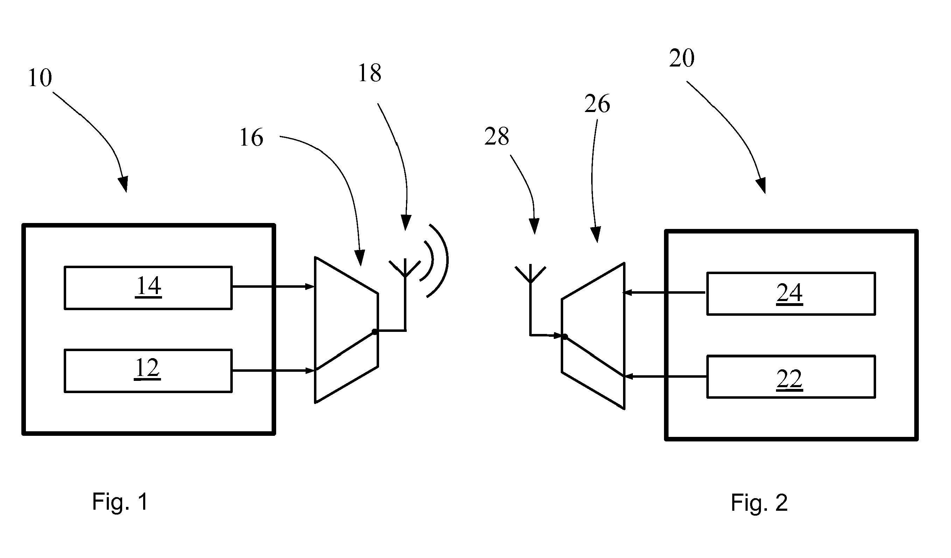

Fig. 1 shows a schematic representation of the first transmitter device 10 according to the invention, in a configuration the first transmitter device 10 adopts during a first time slot. (time slot 1). The first transmitter device 10 comprises a first channel sounder module 12 and a first waveform module 14. The first transmitter device 10 further comprises a first multiplexer 16 and a first media access device 18.

The multiplexer 16 is connected to the first media access device 18. The multiplexer 16 can connect the first media access device 18 to the first channel sounding module or to the first waveform module 14. In the first time slot, the first multiplexer 16 connects the first channel sounder module 12 to the first media access device 18.

As can be gathered from Fig. 2, a second transmitter device 20 comprises a second channel sounder module 22, a second waveform module 14, a second multiplexer 26 and a second media access device 28.

The second multiplexer 26 is configured to establish a connection between the second media access device 28 and the second channel sounder 22, or between the second media access device 28 and the second waveform module 24.

Fig. 2 depicts the second transmitter device 20 in the configuration it adopts during the time slot 1. There, the second multiplexer 26 connects the second media access device 28 to the second channel sounder module 22.

During time slot 1, the media access devices 18 and 28 are dedicated to their corresponding channel sounder module 12, 22. The first transmitter device 10 sends out a test signal to characterize the channel. The second transmitter device 20 receives the test signal sent by the first transmitter device 10 and uses the received signal to estimate a delay and a Doppler shift for each multi-path-component. Depending on these results, the second channel sounder determines an appropriate or adapted Cyclic Prefix and an appropriate or adapted Fast-Fourier-Transform-Size.

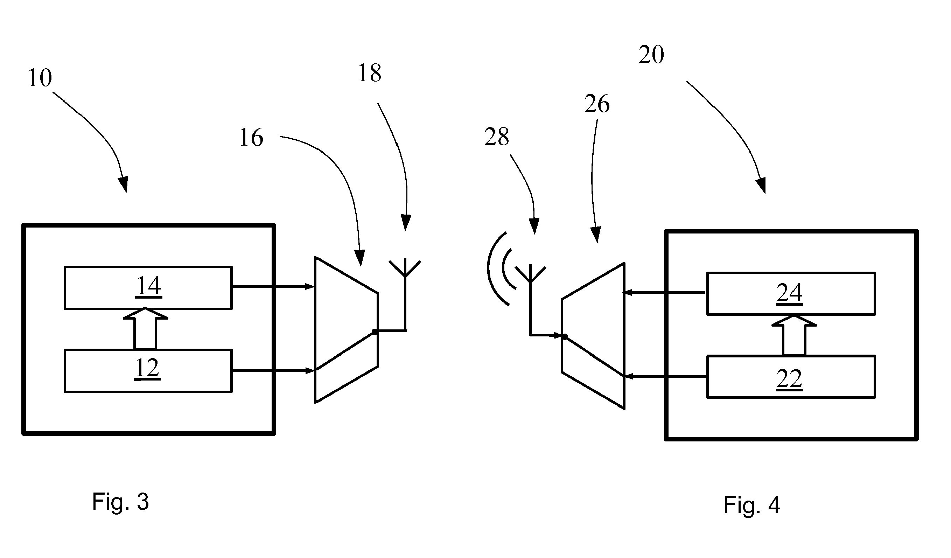

Figs. 3 and 4, respectively, depict the first transmitter device 10 and the second transmitter device 20 in a configuration adopted during a time slot 2. During time slot 2 the media axis device 18 is dedicated to the first channel sounder module 12. Equally, the second media access device 28 is dedicated to the second channel sounder module 22.

In the second time slot, the second channel sounder 22 produces a signal which carries the information about the appropriate or adapted Cyclic Prefix and the appropriate or adapted Fast-Fourier-Transform-Size to the first transmitter device 10 via the second media access device 28 and the first media access device 18. The first channel sounder 12 receives the information about the appropriate or adapted Cyclic Prefix and the appropriate or adapted Fast-Fourier-Transform-Size. Then, the first channel sounder module 12 submits the information about the appropriate or adapted Cyclic Prefix and the appropriate or adapted Fast-Fourier-Transform-Size to the first waveform module 14 to configure the waveform to be used during the communication between the first transmitter device 10 and the second transmitter device 20. Simultaneously the second channel sounder module 22 submits the information about the appropriate or adapted Cyclic Prefix and the appropriate or adapted Fast-Fourier-Transform-Size to the second waveform module 24 to configure the waveform to be used during the communication between the first transmitter device 10 and the second transmitter device 20.

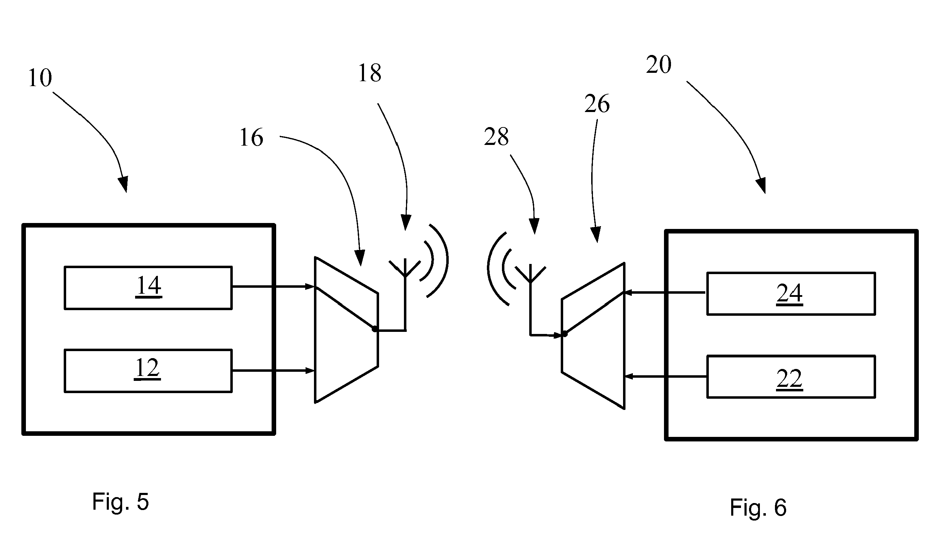

Figs. 5 and 6 depict the configuration of the first transmitter device and the second transmitter device during time slot 3. The first multiplexer 16 connects the first waveform module 14 with the first media access device 18 on the second transmitter device 20 side the second multiplexer 26 connects the second media access device 28 to the second waveform module 24. The first media access device 18 and second media access device 28 communicate with each other through the wireless channel. The first transmitter device 10 and the second transmitter device 20 transmit data after the first waveform module 14 and the second waveform module 24 have been configured by their respective channel sounder module 12, 22. With the appropriate or adapted waveform to be used, the waveform being characterized by the appropriate or adapted Cyclic Prefix and the appropriate or adapted Fast-Fourier-Transform-Size. In the first transmitter device 10, media access is dedicated to the first waveform module 14. In the second transmitter device 20, media access is dedicated to the second waveform module. The first transmitter device 10 and the second transmitter device 20 can now communicate with an optimized Cyclic-Prefix and Fast-Fourier-Transform parameter set bidirectionally, as the propagation characteristics are not of direction specific nature.

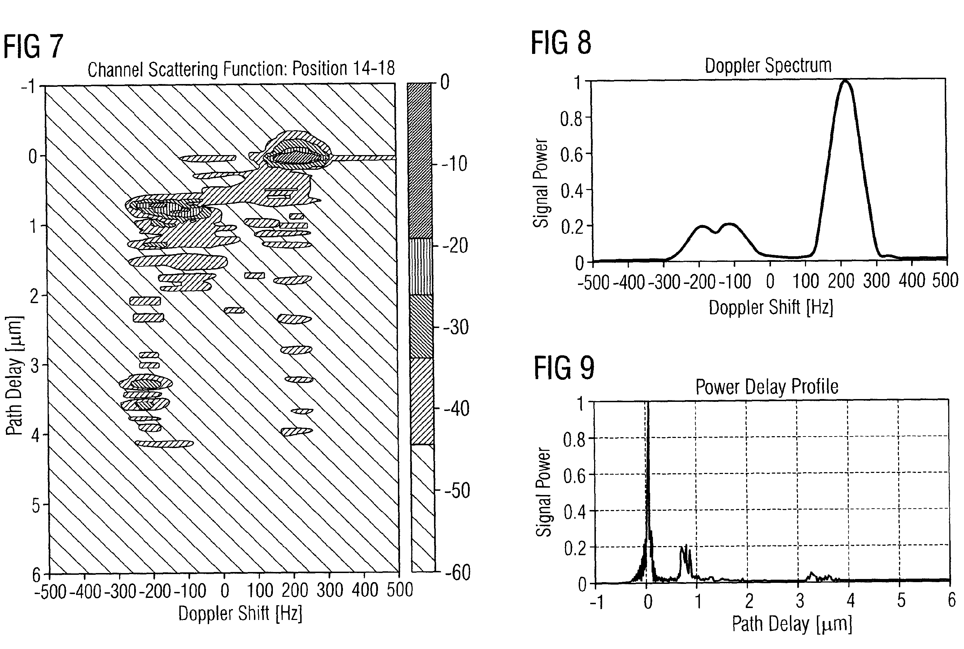

Fig. 7 depicts a representation 30 of the channel scattering function. The Doppler spectrum 32 as shown in Fig. 9 results from a maximum value selection and normalization over the vertical path delay axis of the representation 30. The power delay profile 34 as shown in Fig. 8 results from a maximum value selection and normalization over the horizontal Doppler shift axis of the representation 30. Thus, the scattering function of the wireless channel may be characterized by using the data contained in the representation 30. The channel sounder modules 12, 22 are integrated jointly with the orthogonal frequency division multiplexing waveform in a software defined radio platform. The media access of the waveform modules 14, 24 and the channel sounder modules 12, 22 are preferably organized by a time division multiple access (time slot bases).

The first channel sounder module 12 transmits a specific test signal to the second channel sounder module 22, which estimates the channel scattering function. Each multi-path-component of the wireless channel with its delay and Doppler shift is preferably estimated. The Cyclic Prefix and the Fast-Fourier-Transform-Size of the orthogonal frequency division multiplexing waveform is reconfigurable.

The reconfiguration means preferably optimizes the Cyclic Prefix according to the estimated delay spread and optimizes the Fast-Fourier-Transform-Size according to the estimated Doppler spread. The reconfiguration of the Cyclic-Prefix and the Fast-Fourier-Transform works in two steps with a bidirectional communication in a closed loop process.

Adequate parameterization of a data link is indispensible for throughput and link robustness and depends fundamentally on the characteristics of the present wireless channel. Integrating a channel sounder in a reconfigurable OFDM-based platform enables optimization of the OFDM-specific parameters Cyclic-Prefix-Size and Fast-Fourier-Transform-Size (respective subcarrier spacing). For this purpose, the channel sounder must characterize the scattering function of the wireless channel in terms of delay and Doppler shift for each multi-path-component. This can be done at the start-up of the link in terms of an initial channel characterization and/or adaptively on a runtime basis with a certain periodicity which depends on how fast the channel environment varies. This variation speed of the channel environment is preferably evaluated by identifying the variation rate of the scattering function over time, for example by defining and monitoring variation thresholds. According to this variation rate, the periodicity of channel sounding can be matched as required.

Link-level reconfiguration of OFDM-systems is so far only done regarding the both parameters modulation and coding. The reason is that the required information is gained very easily by a simple error detector magnitude (EVM) vector (see e.g. 802.11 a, g, n, LTE, etc.). The draw back is a very unspecific view on the source of distortion, because all these distortion effects appear jointly in the receiving devices' constellation diagram, where the EVM detector is applied. In consequence, by touching no other parameter than the modulation and coding, the OFDM link stays behind its potential performance.

A more differentiated view on the source of distortion enables specific counter measures to yield a better overall OFDM link performance. This can be achieved with two measures to long.
- The OFDM system must allow for a Fast-Fourier-Transform-flexibility and for a Cyclic-Prefix-flexibility (software defined radio);
- a channel sounder is integrated on a physical layer in the data link to estimate the propagation delay of each multi-path-component to optimize the Cyclic Prefix and their Doppler spread to optimize the Fast-Fourier-Transform-Size.

The advantage is channel dependent adequate reconfiguration of the OFDM-specific modulation parameters Cyclic Prefix and Fast-Fourier-Transform-Size, each time when the channel sounding is applied. This is especially beneficial for channel characteristics which vary fundamentally over time.

### List of References

- 10: First transmitter device
- 12: first channel sounder module
- 14: first waveform module
- 16: first multiplexer
- 18: first media access device

- 20: Second transmitter device
- 22: second channel sounder module
- 24: second waveform module
- 26: second multiplexer
- 28: second media access device

- 30: representation of the channel scattering function
- 32: power delay profile
- 34: Doppler spread spectrum

## Claims

1. Method for transmitting data between a first transmitter device (10) and a second transmitter device (20) by means of a wireless channel, the wireless channel comprising a channel environment and at least one multi-path-component,
wherein the wireless channel is configured to convey a signal from the first transmitter device (10) to the second transmitter device (20) and/or from the second transmitter device (20) to the first transmitter device (10), the signal being produced by the first transmitter device (10) and/or the second transmitter device (20) by using orthogonal frequency-division multiplexing (OFDM)
wherein the signal comprises at least one sub-carrier configured to transmit at least one symbol comprising a Cyclic Prefix,
wherein the first transmitter device (10) comprises a first channel sounder module (12), a first waveform module (14) and a first media access device (18),
wherein the second transmitter device (20) comprises a second channel sounder module (22), a second waveform module (24) and a second media access (28) device, the method comprising the following steps:
a. producing a test signal at the first transmitter device (10);
b. communicating the test signal to the first media access device (18);
c. transmitting the test signal from the first media access device (18) to the second media access device (28);
d. receiving the test signal at the second media access device (28);
e. determining at the second transmitter device (20) an Adapted-Cyclic Prefix based on the received test signal;
f. producing a first signal carrying an information about the Adapted-Cyclic Prefix at the second transmitter device (20);
g. transmitting the first signal from the second media access device (28) to the first media access device (18);
h. decoding the first signal at the first transmitter device (10) to obtain the Adapted-Cyclic Prefix ;
i. transmitting a second signal being configured to convey a payload data and being produced by using orthogonal frequency division multiplexing (OFDM) conveying the at least one symbol using the Adapted-Cyclic Prefix of the symbol, the second signal being produced in the first transmitter device (10) and being transmitted to the second transmitter device (20) via the first media access device (18) and the second media access device (28), and/or produced in the second transmitter device (20) and being transmitted to the first transmitter device (10) via the second media access device (28) and the first media access device (18);
j. repeating steps a. to i. at least once.

2. Method according to claim 1, **characterized in that** the symbol comprises at least two sub-carriers and a Fast-Fourier-Transform size,
wherein an Adapted-Fast-Fourier-Transform size is determined at the second transmitter device (20) based on the received test signal within step e,
wherein the first signal carries the information about the Adapted-Fast-Fourier-Transform size within step f,
wherein the first signal is decoded at the first transmitter device (10) to further obtain the Adapted-Fast-Fourier-Transform size within step h,
wherein conveying the at least one symbol is achieved using the Adapted-Fast-Fourier-Transform size as the Fast-Fourier-Transform size of the symbol within step i.

3. Method according to claim 1 or 2, **characterized in that** the wireless channel comprises a carrier frequency, wherein determining the Adapted-Cyclic Prefix and preferably the Adapted-Fast-Fourier-Transform-Size is achieved by determining a scattering function for each carrier frequency of the carrier based on the received test signal, wherein the carrier frequency is used for transmitting the second signal within step i.

4. Method according to claim 3, **characterized in that** a delay and a Doppler shift for each multi-path-component based on the scattering function are determined preferably at the second channel sounder module (22).

5. Method according to claim 4, **characterized in that** the Adapted-Cyclic Prefix and the Adapted-Fast-Fourier-Transform-Size is determined based on the delay spread and the Doppler spread at the second channel sounder module (22).

6. Method according to one of the claims 1 to 5, **characterized in that** steps. a.
and/or h. are executed at the first channel sounder module (12).

7. Method according to one of the claims 1 to 6, **characterized in that** steps. e.
and/or f. are executed at the second channel sounder module (22).

8. Method according to one of the claims 1 to 7, **characterized in that** the Adapted-Cyclic Prefix and the Adapted-Fast-Fourier-Transform-Size is communicated to the second waveform module (24) after step e. and before step i.

9. Method according to one of the claims 1 to 8, **characterized in that** the Adapted-Cyclic Prefix and the Adapted-Fast-Fourier-Transform-Size is communicated to the first waveform module (14) between steps h. and i.

10. Method according to one of the claims 1 to 9, **characterized in that** in step j., steps a. to i. are repeated after the lapse of a predetermined amount of time, wherein the predetermined amount of time is matched to a variation speed of the channel environment and/or is predetermined when the variation speed is estimated from the second signal.

11. Method according to one of the claims 1 to 10, **characterized in that** orthogonal frequency-division multiplexing is used to produce the second signal during step i.

12. First transmitter device for communicating with a second transmitter device (20) by means of a wireless channel, comprising:
a first media access device (18) configured to communicate bidirectionally over the wireless channel with a second media access device (28) corresponding to the second transmitter device (20),
the first transmitter device (10) being configured to produce a test signal, configured to decode a first signal carrying the information about an Adapted-Cyclic Prefix and a Adapted-Fast-Fourier-Transform-Size and configured to produce a second signal, to be communicated to the first media access device (18),
wherein the first media access device (18) is configured to transmit the test signal and the second signal to the second media access device (28) and configured to receive the first signal and the second signal,
the first transmitter device (10) being configured to be usable to implement the method according to claims 1 to 11.

13. Second transmitter device for communicating with a first transmitter device (10) by means of a wireless channel, comprising:
a second media access device (28) configured to communicate bidirectionally over the wireless channel with a first media access device (18) corresponding to the first transmitter device (20),
the second transmitter device (20) being configured to decode a test signal, configured to produce a first signal carrying the information about a Cyclic Prefix and a Fast-Fourier-Transform-Size and configured to produce a second signal to be communicated to the second media access device (28),
wherein the second media access device (28) is configured to transmit the first signal and the second signal to the first media access device (18) and configured to receive the test signal and the second signal,
the second transmitter device (20) being configured to be usable to implement the method according to claims 1 to 11 .

14. Communication system comprising a first transmitter device (10) according to claim 12 and a second transmitter device (20) according to claim 13, the system being configured to be usable to implement the method according to claims 1 to 11.
